# EUROPÄISCHE PATENTSCHRIFT

(11) **EP 0 281 879 B1**
(45) Veröffentlichungstag und Bekanntmachung des Hinweises auf die Patenterteilung: **16.06.1993**
(21) Anmeldenummer: 88102951.6
(22) Anmeldetag: 27.02.1988
(51) Int. Cl.: B23C 3/16, B23Q 35/10, B23Q 35/04

(54) **Vorrichtung zur spanenden Formgebung gekrümmter Flächen**
Device for machining curved surfaces
Dispositif pour l'usinage de surfaces courbes

(30) Priorität: 13.03.1987 DE 3708150
(43) Veröffentlichungstag der Anmeldung: 14.09.1988
(73) Patentinhaber: KM-kabelmetal Aktiengesellschaft, D-49074 Osnabrück (DE)
(72) Erfinder: Fischer, Horst, Dipl.-Ing., D-4500 Osnabrück (DE); Wichmann, Werner, D-4400 Münster (DE); Wilhelms, Gernot, Dr.-Ing., D-4500 Osnabrück (DE); Wiltmann, Günter, D-4500 Osnabrück (DE)

(56) Entgegenhaltungen:
- DE-A- 2 800 525
- DE-A- 3 040 091
- DE-C- 903 521
- US-A- 2 722 866

## Beschreibung

Die vorliegende Erfindung befaßt sich mit einer Vorrichtung zur spanenden Formgebung gekrümmter Flächen, insbesondere an Kokillenplatten, mittels den Arbeitsweg des oder der spangebenden Werkzeuge durch gekrümmte Gleitbahnen bestimmender Kopierschablonen, wobei mindestens eine der Kopierschablonen um einen Drehpunkt schwenkbar angeordnet ist.

Solche gattungsgemäßen Vorrichtungen sind seit langem bekannt (DE-OS 2544604, DE-OS 2800525), sie sind geeignet zur Ausbildung mehrfach gekrümmter Flächen großer Ausdehnung, wie sie beispielsweise als Kokillenplatten bei Brammenkokillen im Stahlstrangguß Verwendung finden. Entsprechende Kokillen bestehen in der Regel aus kastenförmig zusammengefügten Einzelplatten aus Kupfer (Längs- und Querplatten), in die am oberen offenen Ende das geschmolzene Metall eingegossen wird, das bei seinem Durchgang durch die Kokille und entsprechender Abkühlung einen zumindest an den Außenflächen erstarrten Metallstrang bildet, der am unteren ebenfalls offenen Ende die Kokille verläßt. Bei der überwiegenden Zahl von Stranggußanlagen werden sog. Kreisbogenkokillen eingesetzt, die den erstarrenden Gußstrang auf einer Kreisbahn mit großem Radius, z.B. 6 bis 15 m, aus der Kokille austreten lassen. Dies setzt entsprechende Formgebungen der den Gußstrang begrenzenden Flächen der Kokillenplatten voraus, so daß diese über ihre gesamte Fläche in Durchlaufrichtung gekrümmt sind. Da die Betreiber der Stranggußanlagen wegen der vom Abnehmer der Gußerzeugnisse geforderten Maßgenauigkeiten und Qualitäten entsprechend maßgenaue Kokillenplatten beim Hersteller voraussetzen,kommt es für diesen darauf an, die spanende Bearbeitung plattenförmiger Werkstücke so maßgenau und reproduzierbar durchzuführen,daß die hergestellten Kokillenplatten stets den hohen Anforderungen der Stranggußbetreiber gerecht werden.

Konnten mit den bekannten Mitteln diese Forderungen bereits erfüllt werden,ergeben sich doch Schwierigkeiten, wenn bei den georderten Kokillen ein trichterförmiger Eingießbereich verlangt wird.Wie bereits bekannt (EP 0149734 A2), wird der trichterförmige Eingießbereich durch die Kokillenlängsplatten gebildet,wobei dieser Bereich zum Einführen der Schmelze zu den Schmalseiten der Kokille hin und in Gießrichtung auf das Format des gegossenen Stranges reduziert wird.Durch die trichterförmige Erweiterung soll zum einen eine gleichmäßigere Verteilung der Schmelze und zum anderen ein Vermeiden von Längsrissen und Durchbrüchen erreicht werden.Ein solcher Eingießbereich setzt voraus,daß die Längsplatten der den Formhohlraum bildenden Kokillenplatten im oberen Bereich eine entsprechend trichterförmige Ausnehmung aufweisen. Die spanende Herstellung einer solchen Ausnehmung bedeutet im Falle der Kreisbogenkokillen beispielsweise, daß die Ausnehmung der ein- oder mehrfach gekrümmten Fläche der Längsplatte in ihrer geometrischen Abmessung und dem Verlauf der begrenzenden Flächen angepaßt werden muß.Denn auch der Eingießbereich soll ganz oder teilweise bogenförmig gestaltet sein.Dies ist mit bekannten Arbeitsmitteln bisher nicht möglich,so daß man gezwungen ist,die Anpassung des trichterförmigen Eingießbereiches an die Plattenform ganz oder teilweise von Hand durchzuführen.

Ausgehend vom Stand der Technik gemäß DE-A-2 544 604 liegt daher der Erfindung die Aufgabe zugrunde,eine Möglichkeit zu finden,auch mehrfach gekrümmte Flächen einschließlich der Übergänge zwischen solchen Flächen in exakter Geometrie vollständig in einem Arbeitsgang herzustellen.

Gelöst wird diese Aufgabe bei einer gattungsgemäßen Vorrichtung gemäß der Erfindung dadurch, daß die um einen Drehpunkt schwenkbare Kopierschablone in Wirkzusammenhang mit einer weiteren Schablone steht, die deren Schwenkbewegung nach Größe und Richtung bestimmt. Diese Maßnahme ermöglicht je nach Größe und Richtung der vorgenommenen Verschwenkung beliebige Flächengestaltungen durch das oder die spangebende Werkzeuge. Damit sind Verfahren mit stufenloser Ausarbeitung des trichterförmigen Teiles in einem großflächigen Werkstück mit mehrfach gekrümmter Fläche auch ohne teilweiser Bearbeitung von Hand in genauer reproduzierbarer Form möglich.

Dadurch, daß die um einen Drehpunkt schwenkbare Kopierschablone in Wirkzusammenhang mit einer weiteren Schablone steht, die deren Schwenkbewegung nach Größe und Richtung bestimmt wird bewirkt, daß neben einer exakten Formgebung der zu bearbeitenden Flächen gleichzeitig eine Automatisierung der Arbeitsgänge und damit eine weitgehend personalunabhängige Arbeitsweise möglich ist.

Hierbei kann die in Wirkzusammenhang mit der schwenkbaren Kopierschablone stehende weitere Schablone die Schwenkbewegung entsprechend einer vorgegebenen Kurvenform unmittelbar übertragen. Weist die nicht schwenkbare Kopierschablone beispielsweise eine konkave Kontur auf, wird die schwenkbare Kopierschablone um den Drehpunkt angehoben oder abgesenkt, je nachdem, in welchem Bereich der konkaven Kontur der jeweilige Abgriff erfolgt.

Für besonders komplizierte Kurvenverläufe der zu bearbeitenden Flächen kann man abweichend hiervon vorteilhaft so vorgehen, daß der durch die vorgegebene Kurvenform bewirkten Schwenkbewegung weitere Bewegungskomponenten überlagert werden. Dies kann z.B. erreicht werden, indem die Angriffsflächen für die Kraftübertragung auf das schwenkbare Lineal (Schablone) als gekrümmte Gleitbahnen ausgebildet werden. Damit wird beim Beispiel einer feststehenden Kopierschablone mit konkaver Kontur das schwenkbare Lineal um den Drehpunkt nicht nur lediglich angehoben oder abgesenkt, sondern dabei gleichzeitig auf einer zusätzlichen Kurvenbahn bewegt. Problemlos sind hierdurch beliebige Kurvenverläufe im dreidimensionalen Raum auf das zu bearbeitende Werkstück zu übertragen.

In Weiterbildung des Erfindungsgedankens besteht eine weitere Möglichkeit zur exakteren Werkzeugführung in einer Lagerveränderung des Drehpunktes der schwenkbaren Kopierschablone.

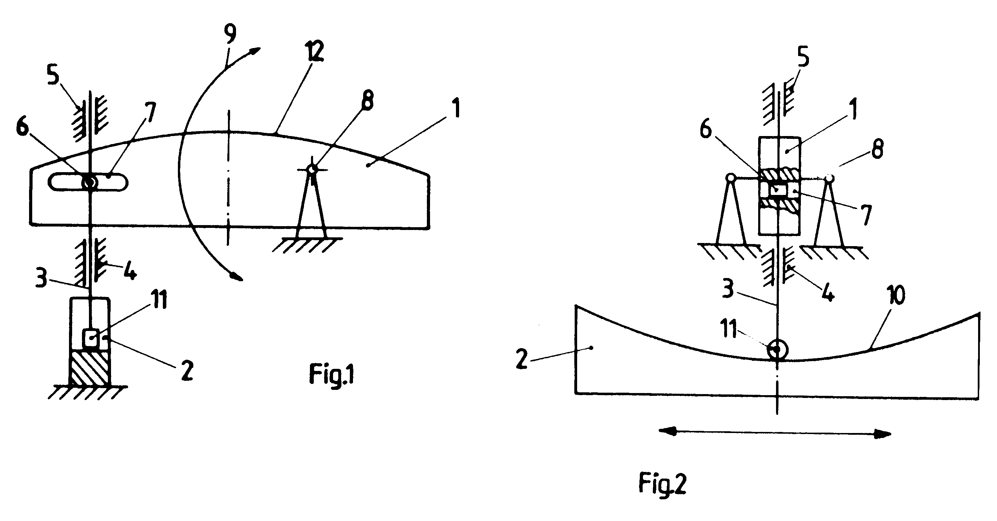

Die Erfindung sei an Hand des in den Fig. 1 und 2 dargestellten Ausführungsbeispieles näher erläutert.

Diese Fig. zeigen in schematischer Darstellung die Wirkungsweise einer erfindungsgemäßen Vorrichtung in zwei Ansichten.

Die Kopierschablonen 1 und 2, auch als Kopierlineale bezeichnet, stehen, wie die Fig. zeigen, in Wirkzusammenhang miteinander. Hierzu dient ein Gestänge 3, das senkrecht zur Kopierschablone 2 angeordnet und in den Lagerstellen 4 und 5 geführt ist. Die Kopierschablone 1 wird in der Ausnehmung oder Nut 7 mittels eines Zapfens 6 des Gestänges 3 geführt. Diese Kopierschablone ist um den Drehpunkt 8 schwenkbar gelagert, die Bewegungsrichtung 9 ist durch Pfeile angedeutet.

Zum Abgriff der vorgegebenen Kontur 10 der Kopierschablone 2 dient z.B. ein Tastrad 11, das der Kontur in den Pfeilrichtungen folgend das Gestänge 3 fortlaufend anhebt bzw. absenkt und damit über den Zapfen 6 die Kopierschablone 1 um den Drehpunkt 8 nach oben in Pfeilrichtung auslenkt bzw. nach unten zurückschwenkt, wenn die örtliche Stellung des Tastrades 11 längs Kontur 10 entsprechend verändert ist.

Die Kopierschablone 1 steuert mit ihrer Kontur 12 und dem kurvenförmigen Bewegungsablauf infolge der Vorgabe durch die Kopierschablone 2 unmittelbar den Bewegungsablauf des nicht dargestellten spangebenden Werkzeuges, beispielsweise eines Hobels, zur Bearbeitung flächiger Werkstücke.

Die Konturen 10 und 12 der Kopierschablonen 1 und 2 können selbstverständlich von der dargestellten Form abweichen, sie müssen es sogar, da durch sie die jeweils gewünschte Kurvenform der Werkstückoberfläche bestimmt wird.

Auch können andere als die dargestellten Kraftübertragungsmittel in Durchführung der Erfindung verwendet werden. So kann beispielsweise die Schwenkbewegung der Kopierschablone 1 durch elektrische, elektromagnetische oder auch pneumatische oder hydraulische Antriebe erfolgen.Ebenso kann die fortlaufende Abtastung der Konturen 10 und 12 der Kopierschablonen im Zuge der fortschreitenden spanenden Formgebung auf optischem oder elektrooptischem Wege durchgeführt werden.

## Patentansprüche

1. Vorrichtung zur spanenden Formgebung gekrümmter Flächen, insbesondere an Kokillenplatten, mittels den Arbeitsweg des oder der spangebenden Werkzeuge durch gekrümmte Gleitbahnen bestimmender Kopierschablonen, wobei mindestens eine der Kopierschablonen um einen Drehpunkt schwenkbar angeordnet ist, **dadurch gekennzeichnet**, daß die um einen Drehpunkt (8) schwenkbare Kopierschablone (1) in Wirkzusammenhang mit einer weiteren Schablone (2) steht, die deren Schwenkbewegung nach Größe und Richtung bestimmt.

2. Vorrichtung nach Anspruch 1, **dadurch gekennzeichnet**, daß die in Wirkzusammenhang mit der schwenkbaren Kopierschablone (1) stehende weitere Schablone (2) die Schwenkbewegung entsprechend einer vorgegebenen Kurvenform (10) unmittelbar erzeugt.

3. Vorrichtung nach Anspruch 2, **dadurch gekennzeichnet**, daß durch die in Wirkzusammenhang mit der schwenkbaren Kopierschablone (1) stehende weitere Schablone (2) der durch die vorgegebene Kurvenform bewirkten Schwenkbewegung weitere Bewegungskomponenten überlagerbar sind.

4. Vorrichtung nach Anspruch 3, **dadurch gekennzeichnet**, daß zur Überlagerung einer weiteren Bewegungskomponente die Angriffsfläche für die Kraftübertragung auf die schwenkbare Kopierschablone (1) als gekrümmte Gleitbahn ausgebildet ist.

5. Vorrichtung nach einem der Ansprüche 2 bis 4, **dadurch gekennzeichnet**, daß zur Kraftübertragung für die Schwenkbewegung ein Hubgestänge (3) dient, das die schwenkbare Kopierschablone (1) in einer Längsnut (7) führt, die an dem dem Drehpunkt (8) gegenüberliegenden Ende angeordnet ist.

6. Vorrichtung nach Anspruch 5, **dadurch gekennzeichnet**, daß die begrenzenden Flächen der Längsnut (7) gekrümmt ausgebildet sind.

7. Vorrichtung nach einem der Ansprüche 1 bis 6**, dadurch gekennzeichnet**, daß die Lage des Drehpunktes (8) der schwenkbaren Kopierschablone (1) veränderbar ist.

8. Vorrichtung nach Anspruch 7, **dadurch gekennzeichnet**, daß die Lageänderung des Drehpunktes (8) von der jeweiligen Lage der schwenkbaren Kopierschablone (1) abhängig ist.

9. Vorrichtung nach Anspruch 7 oder 8, **dadurch gekennzeichnet**, daß die Lageänderung des Drehpunktes (8) während der Bewegung der schwenkbaren Kopierschablone (1) erfolgt.

10. Vorrichtung nach einem der Ansprüche 7 bis 9, **dadurch gekennzeichnet**, daß die Lageänderung des Drehpunktes (8) programmgesteuert ist.

## Claims

1. A device for the machining of curved surfaces, in particular of mould plates, by means of the operating path of the machining tool or tools via curved slideways of controlling templates, wherein at least one of the templates is arranged so as to be pivotable about a pivot, characterised in that the template (1) which is pivotable about a pivot (8) is actively connected with a further template (2) which defines the pivoting movement of the first template in terms of its magnitude and direction.

2. A device as claimed in Claim 1, characterised in that the further template (2) which is actively connected with the pivotable template (1) directly produces the pivoting movement in accordance with a predetermined curvature (10).

3. A device as claimed in Claim 2, characterised in that by means of the further template (2), which is actively connected with the pivotable template (1), further movement components can be superimposed upon the pivoting movement effected by the predetermined curvature.

4. A device as claimed in Claim 3, characterised in that for the superimposition of a further movement component, the surface of application for the transfer of force to the pivotable template (1) has the form of a curved slideway.

5. A device as claimed in one of Claims 2 to 4, characterised in that a lifting rod (3) is provided for the transfer of force for the pivoting movement, which rod (3) guides the pivotable template (1) in a longitudinal groove (7) which is arranged at the end opposite the pivot (8).

6. A device as claimed in Claim 5, characterised in that the delimiting surfaces of the longitudinal groove (7) are curved.

7. A device as claimed in one of Claims 1 to 6, characterised in that the position of the pivot (8) of the pivotable template (1) can be changed.

8. A device as claimed in Claim 7, characterised in that the change in position of the pivot (8) is dependent upon the respective position of the pivotable template (1).

9. A device as claimed in Claim 7 or 8, characterised in that the change in position of the pivot (8) takes place during the movement of the pivotable template (1).

10. A device as claimed in one of Claims 7 to 9, characterised in that the change in position of the pivot (8) is programme-controlled.

## Revendications

1. Dispositif pour former par enlèvement de copeaux des surfaces courbes, en particulier sur des plaques de lingotières, au moyen de la course de travail de l'outil ou des outils d'usinage à travers les glissières recourbées de gabarit de recopiage déterminants, dispositif dans lequel au moins l'un des gabarits est disposé de façon à pouvoir tourner autour d'un centre de rotation, dispositif caractérisé en ce que le gabarit de recopiage (1) pouvant pivoter autour d'un centre de rotation (8) est en relation opérationnelle avec un autre gabarit (2), qui détermine son mouvement de pivotement en amplitude et direction.

2. Dispositif selon la revendication 1, caractérisé en ce que l'autre gabarit (2) se trouvant en relation opérationnelle avec le gabarit de recopiage (1) pouvant pivoter produit directement le mouvement de pivotement correspondant à une forme de courbe pré-définie (10).

3. Dispositif selon la revendication 2, caractérisé en ce que d'autres composantes du mouvement peuvent être superposées au mouvement de pivotement causé par la forme de courbure prédéfinie par l'autre gabarit (2) se trouvant en relation opérationnelle avec le gabarit de recopiage (1) pouvant pivoter.

4. Dispositif selon la revendication 3, caractérisé en ce que pour superposer une autre composante de mouvement la surface d'attaque pour la transmission des forces au gabarit (1) de recopiage pouvant pivoter est constituée comme une glissière recourbée.

5. Dispositif selon l'une des revendications 2 à 4, caractérisé en ce que pour la transmission des forces pour le mouvement de pivotement on utilise une tringlerie de levage (3), qui guide le gabarit de recopiage (1) pouvant pivoter dans une rainure longitudinale (7), qui est disposée à l'extrémité située en regard du centre de rotation (8).

6. Dispositif selon l'une des revendications 5, caractérisé en ce que les surfaces de délimitation de la rainure longitudinale (7) sont formées de façon recourbée.

7. Dispositif selon l'une des revendications 1 à 6, caractérisé en ce que la position du centre de rotation (8) du gabarit de recopiage pouvant pivoter (1) peut être modifiée.

8. Dispositif selon la revendication 7, caractérisé en ce que la modification de la position du centre de rotation (8) est fonction de la position correspondante du gabarit de recopiage pouvant pivoter (1).

9. Dispositif selon la revendication 7 ou 8, caractérisé en ce que la modification de la position du centre de rotation (8) intervient pendant le mouvement du gabarit de recopiage pouvant pivoter (1).

10. Dispositif selon l'une des revendications 7 à 9, caractérisé en ce que la modification de la position du centre de rotation (8) est commandée par programme.
